# EUROPEAN PATENT SPECIFICATION

(11) **EP 1 138 202 B1**
(45) Date of publication and mention of the grant of the patent: **20.12.2006**
(21) Application number: 01116176.7
(22) Date of filing: 24.10.1997
(51) Int. Cl.: A01N 25/30, A01N 57/20, A01N 25/08, A01N 25/04

(54) **Composition and method for treating plants with exogenous chemicals**
Zusammensetzung und Verfahren zur Behandlung von Pflanzen mit exogenen Chemikalien
Composition et procédé pour le traitement des plantes avec des produits chimiques exogènes

(30) Priority: 25.10.1996 US 29317 P; 31.01.1997 US 34887 P; 04.03.1997 US 39789 P
(43) Date of publication of application: 04.10.2001
(62) Divisional of application: 97912922.8
(73) Proprietor: Monsanto Technology LLC, St. Louis, Missouri 63167 (US)
(72) Inventor: Gillespie, Jane L., St. Louis, MO 63167 (US); Ward, Anthony J., Clayton, MO 63105 (US)
(74) Representative: Bosch, Henry

(56) References cited:
- EP-A- 0 206 537
- EP-A- 0 485 207
- EP-A- 0 579 052
- WO-A-91/08666
- WO-A-95/12977
- WO-A-95/16351
- WO-A-96/03871
- DE-A- 3 247 050
- GASKIN R E ET AL: "SOME PHYSICOCHEMICAL FACTORS INFLUENCING FOLIAR UPTAKE ENHANCEMENT OF GLYPHOSATE-MONO(ISOPROPYLAMMONIUM) BY POLYOXYETHYLENE SURFACTANTS" PESTICIDE SCIENCE, vol. 34, no. 3, 1 January 1992 (1992-01-01), pages 195-206, XP000287976
- WYRILL J B ET AL: "GLYPHOSATE TOXICITY TO COMMON MILKWEED AND HEMP DOGBANE AS INFLUENCED BY SURFACTANTS" WEED SCIENCE, vol. 25, no. 3, May 1977 (1977-05), pages 275-287, XP002034447

## Description

### BACKGROUND OF THE INVENTION

This invention relates to formulations and methods for enhancing the efficacy of exogenous chemicals used in treating plants. An exogenous chemical, as defined herein, is a chemical substance, other than glyphosate, selected from an herbicides, nematicides, and plant growth regulators.

Exogenous chemicals, including foliar-applied herbicides, have at times been formulated with surfactants, so that when water is added, the resulting sprayable composition is more easily and effectively retained on the foliage (e.g., the leaves or other photosynthesizing organs) of plants. Surfactants can also bring other benefits, including improved contact of spray droplets with a waxy leaf surface and, in some cases, improved penetration of the accompanying exogenous chemical into the interior of leaves. Through these and perhaps other effects, surfactants have long been known to increase the biological effectiveness of herbicide compositions, or other compositions of exogenous chemicals, when added to or included in such compositions.

Various combinations of exogenous chemicals and surfactants or other adjuvants have been tested in the past. In some instances, the addition of a particular surfactant has not produced uniformly positive or negative changes in the effect of the exogenous chemical on the plant (e.g., a surfactant that may enhance the activity of a particular herbicide on certain weeds may interfere with, or antagonize, the herbicidal efficacy on another weed species).

Some surfactants tend to degrade fairly rapidly in aqueous solutions. As a result, surfactants that exhibit this property can only be used effectively in tank mixes (i.e., mixed with the other ingredients in solution or dispersion in the tank soon before spraying is to occur), rather than being coformulated in an aqueous composition with the other ingredients in the first instance. This lack of stability, or inadequate shelf-life, has hindered the use of certain surfactants in some exogenous chemical formulations.

Other surfactants, though chemically stable, are physically incompatible with certain exogenous chemicals, particularly in concentrate coformulations. For example, most classes of nonionic surfactant, including polyoxyethylene alkylether surfactants, do not tolerate solutions of high ionic strength. Physical incompatibility can also lead to inadequate shelf-life. Other problems that can arise from such incompatibility include the formation of aggregates large enough to interfere with commercial handling and application, for example by blocking spray nozzles.

Another problem that has been observed in the past is the effect of environmental conditions on uptake of an exogenous chemical composition into foliage of a plant. For example, conditions such as temperature, relative humidity, presence or absence of sunlight, and health of the plant to be treated, can affect the uptake of a herbicide into the plant. As a result, spraying exactly the same herbicidal composition in two different situations can result in different herbicidal control of the sprayed plants.

One consequence of the above-described variability is that often a higher rate of herbicide per unit area is applied than might actually be required in that situation, in order to be certain that adequate control of undesired plants will be achieved. For similar reasons, other foliar-applied exogenous chemicals are also typically applied at significantly higher rates than needed to give the desired biological effect in the particular situation where they are used, to allow for the natural variability that exists in efficiency of foliar uptake. A need therefore exists for compositions of exogenous chemicals that, through more efficient uptake into plant foliage, allow reduced use rates.

Many exogenous chemicals are commercially packaged as a liquid concentrate that contains a significant amount of water. The packaged concentrate is shipped to distributors or retailers. Ultimately the packaged concentrate ends up in the hands of an end user, who further dilutes the concentrate by adding water in accordance with label instructions on the package. The dilute composition thus prepared is then sprayed on plants.

A significant portion of the cost of such packaged concentrates is the cost of transporting the concentrate from the manufacturing site to the location where the end user purchases it. Any liquid concentrate formulation that contained relatively less water and thus more exogenous chemical would reduce the cost per unit amount of exogenous chemical. However, one important limit on the ability of the manufacturer to increase the loading of the exogenous chemical in the concentrate is the stability of that formulation. With some combinations of ingredients, a limit will be reached at which any further reduction of water content in the concentrate will cause it to become unstable (e.g., to separate into discrete layers), which may make it commercially unacceptable.

Accordingly, a need exists for improved formulations of exogenous chemicals, particularly herbicides, that are stable, effective, less sensitive to environmental conditions, and permit the use of reduced amounts of exogenous chemical to achieve the desired biological effect in or on plants. A need also exists for stable liquid concentrate formulations of exogenous chemicals that contain less water and more exogenous chemical than prior art concentrates.

WO96/03871 discloses gel formulations comprising an agrochemical (such as herbicide, insecticide, fungicide, adjuvant, synergist or penetrant), an inorganic particulate filler having a surface area in the range 10 to 400 m2/g, the surface of which having hydrophillic characteristics, an activator having a polar group capable of interacting with the filler to produce a gel and optionally a diluent. Some of the compositions contemplated contain adjuvants as provided for herein and as per ratios envisaged herein.

### SUMMARY OF THE INVENTION

The present invention relates to novel methods and compositions wherein exogenous chemicals are applied to plants to generate a desired biological response.

One embodiment of the present invention is a plant treatment composition that comprises (a) an exogenous chemical other than glyphosate and (b) an alkylether surfactant or mixture of such surfactants having the formula

R¹²-O-(CH₂CH₂O)*ₙ*(CH(CH₃)CH₂O)*ₘ*-R¹³ VI

wherein R¹² is an alkyl or alkenyl group having 16 to 22 carbon atoms, n is an average number of 20 to 100, m is an average number of 0 to 5 and R¹³ is hydrogen or C₁₋₄ alkyl. The alkylether surfactant or mixture thereof is present in an amount such that the weight/weight ratio of said alkylether surfactant or mixture of such surfactants to the exogenous chemical is 1:3 to 1:100. The term "alkylether" as used herein should be understood to include alkenylether surfactants. Preferably R¹² is a saturated straight-chain alkyl group, R¹³ is hydrogen, m is 0 and n is from 20 to 40. Most preferably the alkylether surfactant is a polyoxyethylene cetyl or stearyl ether or mixture thereof having 20-40 moles of ethylene oxide (EO).

In one embodiment, the composition is an aqueous concentrate further comprising water and an amount of a solid inorganic particulate colloidal material effective to stabilize the composition, said composition not exhibiting phase separation over a period of time T as defined below when stored in a closed container at a temperature in the range from about 15°C to about 30°C; wherein the exogenous chemical and the surfactant are present at concentrations in the absolute or relative to each other such that, in the absence of the colloidal material, phase separation would occur during said period of time T.

The period of time T over which a composition can be observed to determine if phase separation occurs is in the range from 1 hour to 60 days. "Phase separation" in the present context means separation of at least part of the surfactant component from other ingredients of the composition as a distinct phase. The particulate colloidal material preferably is present in an amount between 0.01% and 5% by weight, more preferably between 0.5% and 2.5% by weight, of the composition. By "aqueous concentrate" is meant a composition comprising water and from 10% to 60% by weight of the exogenous chemical.

Examples of suitable solid particulate colloidal materials include inorganic oxides such as silicon oxides, aluminum oxides, titanium oxides, and mixtures thereof. Preferably the particulate colloidal material has an average specific surface area of 50 to 400 m²/g, more preferably 180 to 400 m²/g. In one particular embodiment, the particulate colloidal material has a bimodal distribution of specific surface area whereby a first component of the colloidal material has an average specific surface area of 50 to 150 m²/g and a second component of the colloidal material has an average specific surface area of 180 to 400 m²/g.

In another embodiment of the invention, compositions are provided comprising (a) an exogenous chemical, (b) an alkylether surfactant or mixture of such surfactants having the formula shown above, and (c) a compound of formula

R¹⁴-CO-A-R¹ VII

wherein R¹⁴ is a hydrocarbyl group having 5 to 21 carbon atoms, R¹⁵ is a hydrocarbyl group having 1 to 14 carbon atoms, the total number of carbon atoms in R¹⁴ and R¹⁵ is 11 to 27, and A is O or NH. R¹⁴ preferably has 11 to 21 carbon atoms, R¹⁵ preferably has 1 to 6 carbon atoms and A is preferably O. The aqueous composition in embodiments comprising a compound of formula VII preferably is an emulsion comprising an oil phase that comprises said second excipient substance, for example a water-in-oil-in-water multiple emulsion or an oil-in-water emulsion.

A composition comprising a compound of formula VII can, if desired or necessary, further comprise an amount of solid inorganic particulate colloidal material effective to stabilize the composition, exactly as defined above.

In certain preferred embodiments of the present invention, the compound (c) is a C₁₋₄ alkyl ester of a C₁₂₋₁₈ fatty acid, more preferably a C₁₋₄ alkyl ester of a C₁₂₋₁₈ saturated fatty acid. Propyl, isopropyl or butyl esters of C₁₂₋₁₈ fatty acids, such as butyl stearate, are especially preferred.

A wide variety of exogenous chemicals can be used in the compositions and methods of the present invention. A preferred class is foliar-applied exogenous chemicals, i.e. exogenous chemicals that are normally applied post-emergence to foliage of plants. A preferred subclass of foliar-applied exogenous chemicals is those that are water-soluble. By "water-soluble" in this context is meant having a solubility in distilled water at 25°C greater than about 1% by weight. Especially preferred water-soluble exogenous chemicals are salts that have an anion portion and a cation portion. In one embodiment of the invention, at least one of the anion and cation portions is biologically active and has a molecular weight of less than about 300. Particular examples of such exogenous chemicals where the cation portion is biologically active are paraquat, diquat and chlormequat. More commonly it is the anion portion that is biologically active.

Another preferred subclass of exogenous chemicals is those that exhibit systemic biological activity in the plant.

Compositions of the present invention can be used in methods of treating plants. Foliage of a plant is contacted with a biologically effective amount of the composition. "Contacting" in this context means placing the composition on the foliage.

A composition of the present invention comprising an exogenous chemical other than glyphosate and an alkylether surfactant as described above can have a number of different physical forms. For example, the composition can further comprise water in an amount effective to make the composition a dilute aqueous composition ready for application to foliage of a plant. Such a composition typically contains 0.02 to 2 percent by weight of the exogenous chemical, but for some purposes can contain up to about 10 percent by weight or even more of the exogenous chemical.

Alternatively, the composition can be a shelf-stable concentrate composition comprising the exogenous chemical substance in an amount of 10 to 90 percent by weight. Such shelf-stable concentrates can be, for example, (1) a solid composition comprising the exogenous chemical substance in an amount of about 30 to about 90 percent by weight, such as a water-soluble or water-dispersible granular formulation, or (2) a composition that further comprises a liquid diluent, wherein the composition comprises the exogenous chemical substance in an amount of 10 to 60 percent by weight. In this latter embodiment, it is especially preferred for the exogenous chemical substance to be water-soluble and present in an aqueous phase of the composition in an amount of about 15 to about 45 percent by weight of the composition. In particular, such a composition can be, for example, an aqueous solution concentrate or an emulsion having an oil phase. If it is an emulsion, it can more specifically be, for example, an oil-in-water emulsion, a water-in-oil emulsion, or a water-in-oil-in-water multiple emulsion. When a compound (c) such as butyl stearate is included in an emulsion composition, it is predominantly present in the oil phase.

As described above, one embodiment of the invention is a sprayable composition that comprises an exogenous chemical, an aqueous diluent, and an alkylether surfactant.. The term "spray composition" is sometimes used herein to mean a sprayable composition.

In a related embodiment of the invention, a concentrate composition is provided which, upon dilution, dispersion or dissolution in water forms the sprayable composition just described. The concentrate composition contains a reduced amount of the aqueous diluent, or, in a particular embodiment, is a dry composition having less than about 5% water by weight. Typically a concentrate composition of the invention contains at least about 10% by weight of the exogenous chemical, preferably at least about 15%.

The compositions and methods of the present invention have a number of advantages. They provide enhanced biological activity of exogenous chemicals in or on plants in comparison with prior formulations, either in terms of greater ultimate biological effect, or obtaining an equivalent biological effect while using a reduced application rate of exogenous chemical. Certain herbicide formulations of the present invention can avoid antagonism that has been observed in some prior art herbicide formulations, and can minimize quick production of necrotic lesions on leaves that in some situations hinder overall translocation of herbicide in the plant. Certain herbicide compositions of the invention modify the spectrum of activity of the herbicide across a range of plant species.

Another advantage of the present invention is that it employs relatively small amounts of the alkylether surfactant in relation to the amount of exogenous chemical employed. This makes the compositions and methods of the present invention relatively inexpensive, and also tends to reduce instability problems in specific compositions where the alkylether surfactant is physically incompatible with the exogenous chemical.

Even at the low concentrations of the excipient substances used in the present invention, there may be limits on the maximum concentration of exogenous chemical that can be used without causing compatibility problems (e.g., separation of the composition into discrete layers). In some preferred embodiments of the invention, composition stability at high loadings of exogenous chemical is maintained by adding other ingredients such as, for example, colloidal particulates. Some compositions of the present invention exhibit enhanced biological activity and have a higher loading of exogenous chemical than possible in prior art compositions.

Further, compositions of the present invention are less sensitive in some instances to environmental conditions such as relative humidity at the time of application to the plant. Also, the present invention allows the use of smaller amounts of herbicides or other pesticides, while still obtaining the required degree of control of weeds or other undesired organisms.

### DESCRIPTION OF ILLUSTRATIVE EMBODIMENTS

Examples of exogenous chemical substances that can be included in compositions of the present invention include, but are not limited to, chemical pesticides (such as herbicides, algicides, fungicides, bactericides, viricides, insecticides, aphicides, miticides, nematicides, molluscicides and the like), plant growth regulators, fertilizers and nutrients, gametocides, defoliants, desiccants, mixtures thereof and the like. In one embodiment of the invention, the exogenous chemical is polar.

A preferred group of exogenous chemicals are those that are normally applied post-emergence to the foliage of plants, i.e. foliar-applied exogenous chemicals.

Some exogenous chemicals useful in the present invention are water-soluble, for example salts that comprise biologically active ions, and also comprise counterions, which may be biologically inert or relatively inactive. A particularly preferred group of these water-soluble exogenous chemicals or their biologically active ions or moieties are systemic in plants, that is, they are to some extent translocated from the point of entry in the foliage to other parts of the plant where they can exert their desired biological effect. Especially preferred among these are herbicides, plant growth regulators and nematicides, particularly those that have a molecular weight, excluding counterions, of less than about 300. More especially preferred among these are exogenous chemical compounds having one or more functional groups selected from amine, carboxylate, phosphonate and phosphinate groups.

Among such compounds, an even more preferred group are herbicidal or plant growth regulating exogenous chemical compounds having at least one of each of amine, carboxylate, and either phosphonate or phosphinate functional groups. Examples include salts of glufosinate, for instance the ammonium salt (ammonium DL-homoalanin-4-yl (methyl) phosphinate).

Another preferred group of exogenous chemicals which can be applied by the method of the invention are nematicides such as those disclosed in U.S. Patent No. 5,389,680, the disclosure of which is incorporated herein by reference. Preferred nematicides of this group are salts of 3,4,4-trifluoro-3-butenoic acid or of N-(3,4,4-trifluoro-1-oxo-3-butenyl)glycine.

Exogenous chemicals which can usefully be applied by the method of the present invention are normally, but not exclusively, those which are expected to have a beneficial effect on the overall growth or yield of desired plants such as crops, or a deleterious or lethal effect on the growth of undesirable plants such as weeds. The method of the present invention is particularly useful for herbicides, especially those that are normally applied post-emergence to the foliage of unwanted vegetation.

Herbicides which can be applied by the method of the present invention include but are not limited to any listed in standard reference works such as the "Herbicide Handbook," Weed Science Society of America, 1994, 7th Edition, or the "Farm Chemicals Handbook," Meister Publishing Company, 1997 Edition. Illustratively these herbicides include acetanilides such as acetochlor, alachlor and metolachlor, aminotriazole, asulam, bentazon, bialaphos, bipyridyls such as paraquat, bromacil, cyclohexenones such as clethodim and sethoxydim, dicamba, diflufenican, dinitroanilines such as pendimethalin, diphenylethers such as acifluorfen, fomesafen and oxyfluorfen, fatty acids such as C₉₋₁₀ fatty acids, fosamine, flupoxam, glufosinate, hydroxybenzonitriles such as bromoxynil, imidazolinones such as imazaquin and imazethapyr, isoxaben, norflurazon, phenoxies such as 2,4-D, phenoxypropionates such as diclofop, fluazifop and quizalofop, picloram, propanil, substituted ureas such as fluometuron and isoproturon, sulfonylureas such as chlorimuron, chlorsulfuron, halosulfuron, metsulfuron, primisulfuron, sulfometuron and sulfosulfuron, thiocarbamates such as triallate, triazines such as atrazine and metribuzin, and triclopyr. Herbicidally active derivatives of any known herbicide are also within the scope of the present invention. A herbicidally active derivative is any compound which is a minor structural modification, most commonly but not restrictively a salt or ester, of a known herbicide. These compounds retain the essential activity of the parent herbicide, but may not necessarily have a potency equal to that of the parent herbicide. These compounds may convert to the parent herbicide before or after they enter the treated plant. Mixtures or coformulations of a herbicide with other ingredients, or of more than one herbicide, may likewise be employed.

Exogenous chemicals should be applied to plants at a rate sufficient to give the desired biological effect. These application rates are usually expressed as amount of exogenous chemical per unit area treated, e.g. grams per hectare (g/ha). What constitutes a "desired effect" varies according to the standards and practice of those who investigate, develop, market and use a specific class of exogenous chemicals. For example, in the case of a herbicide, the amount applied per unit area to give 85% control of a plant species as measured by growth reduction or mortality is often used to define a commercially effective rate.

Herbicidal effectiveness is one of the biological effects that can be enhanced through this invention. "Herbicidal effectiveness," as used herein, refers to any observable measure of control of plant growth, which can include one or more of the actions of (1) killing, (2) inhibiting growth, reproduction or proliferation, and (3) removing, destroying, or otherwise diminishing the occurrence and activity of plants.

The herbicidal effectiveness data set forth herein report "inhibition" as a percentage following a standard procedure in the art which reflects a visual assessment of plant mortality and growth reduction by comparison with untreated plants, made by technicians specially trained to make and record such observations. In all cases, a single technician makes all assessments of percent inhibition within any one experiment or trial. Such measurements are relied upon and regularly reported by Monsanto Company in the course of its herbicide business.

The selection of application rates that are biologically effective for a specific exogenous chemical is within the skill of the ordinary agricultural scientist. Those of skill in the art will likewise recognize that individual plant conditions, weather and growing conditions, as well as the specific exogenous chemical and formulation thereof selected, will affect the efficacy achieved in practicing this invention. Useful application rates for exogenous chemicals employed can depend upon all of the above conditions.

Effectiveness in greenhouse tests, usually at exogenous chemical rates lower than those normally effective in the field, is a proven indicator of consistency of field performance at normal use rates. However, even the most promising composition sometimes fails to exhibit enhanced performance in individual greenhouse tests. As illustrated in the Examples herein, a pattern of enhancement emerges over a series of greenhouse tests; when such a pattern is identified this is strong evidence of biological enhancement that will be useful in the field.

Compositions of the present invention include one or more long-chain alkylether surfactants having the formula VI above. R¹² can be branched or unbranched, saturated or unsaturated. R¹² is preferably straight chain saturated C₁₆ alkyl (cetyl) or straight chain saturated C₁₈ alkyl (stearyl). In preferred alkylethers m is 0, n is an average number from 20 to 40 and R¹³ is preferably hydrogen. Among especially preferred alkylether surfactants are those identified in the International Cosmetic Ingredient Directory as ceteth-20, ceteareth-20, ceteareth-27, steareth-20 and steareth-30.

Aqueous concentrate compositions in some circumstances are limited in the degree to which an exogenous chemical can be loaded. At some point, as the loading of exogenous chemical is increased, the composition will not remain suitably stable. Addition of a small amount of colloidal particulate to such compositions has surprisingly been found to greatly increase loading ability while retaining desired stability. Inclusion of such colloidal particulates can also enhance biological activity of an exogenous chemical formulation. Oxides of silicon, aluminum and titanium are preferred colloidal particulate materials. Particle size is preferably such that specific surface area is in the range from 50 to 400 m²/g. We have found especially useful improvement in storage stability can be obtained using colloidal particulates having specific surface area between about 180 and about 400 m²/g.

Other means of improving stability of highly loaded compositions may also be possible and are within the scope of the present invention.

Compositions in accordance with the present invention are typically prepared by combining water, the exogenous chemical, the alkylether surfactant, and other ingredients such as colloidal particulates and/or fatty acid esters if such ingredients are to be used. Details of specific processes used to prepare such compositions are included in the Examples herein.

The concentrations of the various components will vary, in part depending on whether a concentrate is being prepared that will be further diluted before spraying onto a plant, or whether a solution or dispersion is being prepared that can be sprayed without further dilution.

Although various compositions of the present invention are described herein as comprising certain listed materials, in some preferred embodiments of the invention the compositions consist essentially of the indicated materials.

Optionally, other agriculturally acceptable materials can be included in the compositions. For example, more than one exogenous chemical can be included. Also, various agriculturally acceptable adjuvants can be included, whether or not their purpose is to directly contribute to the effect of the exogenous chemical on a plant. For example, when the exogenous chemical is a herbicide, liquid nitrogen fertilizer or ammonium sulfate might be included in the composition. As another example, stabilizers can be added to the composition. In some instances it might be desirable to include microencapsulated acid in the composition, to lower the pH of a spray solution on contact with a leaf. One or more surfactants can also be included. Surfactants mentioned here by trade name, and other surfactants that can be useful in the method of the invention, are indexed in standard reference works such as McCutcheon's Emulsifiers and Detergents, 1997 edition, Handbook of Industrial Surfactants, 2nd Edition, 1997, published by Gower, and International Cosmetic Ingredient Dictionary, 6th Edition, 1995.

The compositions of the present invention can be applied to plants by spraying, using any conventional means for spraying liquids, such as spray nozzles, atomizers, or the like. Compositions of the present invention can be used in precision farming techniques, in which apparatus is employed to vary the amount of exogenous chemical applied to different parts of a field, depending on variables such as the particular plant species present, soil composition, and the like. In one embodiment of such techniques, a global positioning system operated with the spraying apparatus can be used to apply the desired amount of the composition to different parts of a field.

The composition at the time of application to plants is preferably dilute enough to be readily sprayed using standard agricultural spray equipment. Preferred application rates for the present invention vary depending upon a number of factors, including the type and concentration of active ingredient and the plant species involved. Useful rates for applying an aqueous composition to a field of foliage can range from 25 to 1,000 liters per hectare (l/ha) by spray application. The preferred application rates for aqueous solutions are in the range from 50 to 300 l/ha.

Many exogenous chemicals (other than glyphosate herbicide) must be taken up by living tissues of the plant and translocated within the plant in order to produce the desired biological (e.g., herbicidal) effect. Thus, it is important that a herbicidal composition not be applied in such a manner as to excessively injure and interrupt the normal functioning of the local tissue of the plant so quickly that translocation is reduced. However, some limited degree of local injury can be insignificant, or even beneficial, in its impact on the biological effectiveness of certain exogenous chemicals.

A large number of compositions of the invention are illustrated in the Examples that follow.

Various proprietary excipients were used in compositions of the Examples. They may be identified as follows:

| Trade name | Manufacturer | Chemical description |
|---|---|---|
| Aerosil 90 | Degussa | amorphous silica, 90 m²/g |
| Aerosil 380 | Degussa | amorphous silica, 380 m²/g |
| Aerosil MOX-80 | Degussa | amorphous silica/aluminum oxide, 80 m²/g |
| Aerosil MOX-170 | Degussa | amorphous silica/aluminum oxide, 170 m²/g |
| Aerosil OX-50 | Degussa | amorphous silica, 50 m²/g |
| Agrimul PG-2069 | Henkel | C₉₋₁₁ alkylpolyglycoside |
| Arcosolve DPM | Arco | dipropyleneglycol monomethyl ether |
| Dowanol PNB | Dow | propylene glycol n-butyl ether |
| Dowanol TPNB | Dow | tripropylene glycol n-butyl ether |
| Emerest 2661 | Henkel | PEG-12 laurate |
| Ethomeen T/25 | Akzo | tallowamine 15EO |
| Fluorad FC-754 | 3M | fluorinated alkyl quaternary ammonium chloride |
| Fluorad FC-760 | 3M | fluorinated alkanol EO |
| Genapol UD-110 | Hoechst | C₁₁ oxo alcohol 11EO |
| MON 0818 | Monsanto | tallowamine 15EO-based surfactant |
| Neodol 1-12 | Shell | C₁₁ linear alcohol 12EO |
| Neodol 1-9 | Shell | C₁₁ linear alcohol 9EO |
| Neodol 25-12 | Shell | C₁₂₋₁₅ linear alcohol 12EO |
| Neodol 25-20 | Shell | C₁₂₋₁₅ linear alcohol 20EO |
| Neodol 25-3 | Shell | C₁₂₋₁₅ linear alcohol 3EO |
| Neodol 45-13 | Shell | C₁₄₋₁₅ linear alcohol 13EO |
| Neodox 25-11 | Shell | C₁₂₋₁₅ linear alcohol ethoxycarboxylate 11EO |
| Orchex 796 | Exxon | paraffinic oil |
| Pluronic F-108 | BASF | 128EO-54PO-128EO block copolymer |
| Pluronic F-127 | BASF | 98EO-67PO-98EO block copolymer |
| Pluronic F-68 | BASF | 75EO-30PO-75EO block copolymer |
| Sident 9 | Degussa | abrasive silica, 50 m²/g |
| Sipernat 22 | Degussa | hydrophilic precipitated silica, 190 m²/g, av. aggregate size 100 µm |
| Sipemat 22S | Degussa | hydrophilic precipitated silica, 190 m²/g, av. aggregate size <10 µm |
| Span 60 | ICI | sorbitan monostearate |
| Span 80 | ICI | sorbitan monooleate |
| Stepfac 8170 | Stepan | nonylphenol EO phosphate |
| Surfynol 104 | Air Products | tetramethyldecyne diol |
| Tergitol 15-S-15 | Union Carbide | C₁₅ branched secondary alcohol 15EO |
| Tergitol 15-S-20 | Union Carbide | C₁₅ branched secondary alcohol 20EO |
| Tergitol 15-S-30 | Union Carbide | C₁₅ branched secondary alcohol 30EO |
| Tergitol 15-S-40 | Union Carbide | C₁₅ branched secondary alcohol 40EO |
| Tween 20 | ICI | sorbitan monolaurate 20EO |
| Tween 80 | ICI | sorbitan monooleate 20EO |
| Velvetex AB-45 | Henkel | cocobetaine |

Fatty alcohol ethoxylate (alkylether) surfactants are referred to in the Examples by their generic names as given in the International Cosmetic Ingredient Dictionary, 6th Edition, 1995 (Cosmetic, Toiletry and Fragrance Association, Washington, DC). They were interchangeably sourced from various manufacturers, for example:
Laureth-23: Brij 35 (ICI), Trycol 5964 (Henkel).
Ceteth-10: Brij 56 (ICI).
Ceteth-20: Brij 58 (ICI).
Steareth-10: Brij 76 (ICI).
Steareth-20: Brij 78 (ICI), Emthox 5888-A (Henkel), STA-20 (Heterene).
Steareth-30: STA-30 (Heterene).
Steareth-100: Brij 700 (ICI).
Ceteareth-15: CS-15 (Heterene).
Ceteareth-20: CS-20 (Heterene).
Ceteareth-27: Plurafac A-38 (BASF).
Ceteareth-55: Plurafac A-39 (BASF).
Oleth-2: Brij 92 (ICI).
Oleth-10: Brij 97 (ICI).
Oleth-20: Brij 98 (ICI), Trycol 5971 (Henkel).

Where a proprietary excipient is a surfactant supplied as a solution in water or other solvent, the amount to be used was calculated on a true surfactant basis, not an "as is" basis. For example, Fluorad FC-135 is supplied as 50% true surfactant, together with 33% isopropanol and 17% water; thus to provide a composition containing 0.1% w/w Fluorad FC-135 as reported herein, 0.2 g of the product as supplied was included in 100 g of the composition. The amount of lecithin, however, is always reported herein on an "as is" basis, regardless of the content of phospholipid in the lecithin sample used.

Spray compositions of the Examples contained an exogenous chemical in addition to the excipient ingredients listed. The amount of exogenous chemical was selected to provide the desired rate in grams per hectare (g/ha) when applied in a spray volume of 93 l/ha. Several exogenous chemical rates were applied for each composition. Thus, except where otherwise indicated, when spray compositions were tested, the concentration of exogenous chemical varied in direct proportion to exogenous chemical rate, but the concentration of excipient ingredients was held constant across different exogenous chemical rates.

Concentrate compositions were tested by dilution, dissolution or dispersion in water to form spray compositions. In these spray compositions prepared from concentrates, the concentration of excipient ingredients varied with that of exogenous chemical.

Many of the Examples feature aqueous concentrate compositions of the invention. Except where otherwise indicated, these aqueous concentrate compositions were prepared by the following general processes (v) to (x).

(v) A weighed amount of lecithin powder of the type indicated was placed in a beaker and deionized water was added in sufficient quantity to provide, after sonication as detailed below, a lecithin stock at a convenient concentration, normally in the range from 10% to 20% w/w and typically 15% w/w. The beaker and its contents were then placed in a Fisher Sonic Dismembrator, Model 550, fitted with a 2.4 cm probe tip with the pulse period set at 15 seconds with 1 minute intervals between pulses to allow cooling. Power output was set at level 8. After a total of 3 minutes of sonication (12 pulse periods) the resulting lecithin stock was finally adjusted to the desired concentration if necessary with deionized water. To prepare an aqueous concentrate formulation, the following ingredients were mixed in the appropriate proportions with mild agitation, normally in the order given although this was sometimes varied and was found in some cases to affect the physical stability of the concentrate formulation: (a) exogenous chemical; (b) lecithin stock; (c) other ingredients if required; and (d) water.

(vi) Water-in-oil-in-water (W/O/W) multiple emulsions were prepared as follows. First a water-in-oil emulsion was prepared. To do this, the required amounts of the selected oil and a first emulsifier (referred to in the Examples as "emulsifier #1") were mixed thoroughly. The amount of water required in the inner aqueous phase was then added to complete the water-in-oil emulsion, which was finally subjected to high-shear mixing, typically using a Silverson L4RT-A mixer fitted with a fine emulsor screen operated for 3 minutes at 10,000 rpm. The required amount of a second emulsifier (referred to in the Examples as "emulsifier #2") was next added to the water-in-oil emulsion with agitation to ensure homogeneity. To complete the water-in-oil-in-water multiple emulsion composition, the amount of water required in the outer aqueous phase was added. The composition was finally subjected to high-shear mixing, typically using a Silverson L4RT-A mixer fitted with a medium emulsor screen, operated for 3 minutes at 7,000 rpm.

(vii) Oil-in-water (O/W) emulsions were prepared as follows. The required amount of the selected oil and surfactant (sometimes referred to in the Examples as "emulsifier #2" as it corresponds to the second emulsifier in process (vi)) were mixed thoroughly. If the surfactant selected was not free-flowing at ambient temperature, heat was applied to bring the surfactant into a flowable condition before mixing with the oil. The composition was finally subjected to high-shear mixing, typically using a Silverson L4RT-A mixer fitted with a medium emulsor screen, operated for 3 minutes at 7,000 rpm.

(x) The procedure for preparing aqueous concentrate formulations containing lecithin and butyl stearate was different from that followed for other lecithin-containing concentrates. Exogenous chemical was first added, with mild agitation, to deionized water in a formulation jar. The selected surfactant (other than lecithin) was then added, while continuing the agitation, to form a preliminary exogenous chemical/ surfactant mixture. Where the surfactant is not free-flowing at ambient temperature, the order of addition was not as above. Instead, the non-free-flowing surfactant was first added to water together with any other surfactant (other than lecithin) required in the composition, and was then heated to 55°C in a shaker bath for 2 hours. The resulting mixture was allowed to cool, then exogenous chemical was added with mild agitation to form the preliminary exogenous chemical/surfactant mixture. A weighed amount of the selected lecithin was added to the preliminary exogenous chemical/surfactant mixture, with stirring to break up lumps. The mixture was left for about 1 hour to allow the lecithin to hydrate, then butyl stearate was added, with further stirring until no phase separation occurred. The mixture was then transferred to a microfluidizer (Microfluidics International Corporation, Model M-1 10F) and microfluidized for 3 to 5 cycles at 10,000 psi (69 MPa). In each cycle, the formulation jar was rinsed with microfluidized mixture. In the last cycle, the finished composition was collected in a clean dry beaker.

The following procedure was used for testing compositions of the Examples to determine herbicidal effectiveness, except where otherwise indicated.

Seeds of the plant species indicated were planted in 85 mm square pots in a soil mix which was previously steam sterilized and prefertilized with a 14-14-14 NPK slow release fertilizer at a rate of 3.6 kg/m³. The pots were placed in a greenhouse with sub-irrigation. About one week after emergence, seedlings were thinned as needed, including removal of any unhealthy or abnormal plants, to create a uniform series of test pots.

The plants were maintained for the duration of the test in the greenhouse where they received a minimum of 14 hours of light per day. If natural light was insufficient to achieve the daily requirement, artificial light with an intensity of approximately 475 microeinsteins was used to make up the difference. Exposure temperatures were not precisely controlled but averaged about 27°C during the day and about 18°C during the night. Plants were sub-irrigated throughout the test to ensure adequate soil moisture levels.

Pots were assigned to different treatments in a fully randomized experimental design with 3 replications. A set of pots was left untreated as a reference against which effects of the treatments could later be evaluated.

Treatments were made using dilute aqueous compositions. These could be prepared as spray compositions directly from their ingredients, or by dilution with water of preformulated concentrate compositions.

For evaluation of herbicidal effectiveness, all plants in the test were examined by a single practiced technician, who recorded percent inhibition, a visual measurement of the effectiveness of each treatment by comparison with untreated plants. Inhibition of 0% indicates no effect, and inhibition of 100% indicates that all of the plants are completely dead. Inhibition of 85% or more is in most cases considered acceptable for normal herbicidal use; however in greenhouse tests such as those of the Examples it is normal to apply compositions at rates which give less than 85% inhibition, as this makes it easier to discriminate among compositions having different levels of effectiveness.

### EXAMPLE 1

Spray compositions were prepared containing paraquat dichloride and excipient ingredients as shown in Table 1a. Compositions were prepared by simple mixing of ingredients. Soybean lecithin (45% phospholipid, Avanti), where included, was first prepared with sonication in water to make a homogeneous composition. The range of active ingredient concentrations was selected appropriate to the active ingredient applied.

**Table 1a**

| Spray comp. | % w/w | | | | | Lecithin supplied as | Methyl oleate supplied as |
|---|---|---|---|---|---|---|---|
| | Lecithin | FC-754 | Butyl stearate | Methyl oleate | Oleth-20 | | |
| 24-01 | 0.05 | 0.050 | | | | soybean lecithin | |
| 24-02 | 0.05 | | 0.050 | | | soybean lecithin | |
| 24-03 | 0.05 | | | | | soybean lecithin | |
| 24-04 | | 0.050 | | | | | |
| 24-05 | | | 0.050 | | | | |
| 24-06 | 0.05 | | | | | LI-700 | |
| 24-07 | | | 0.005 | | 0.05 | | |
| 24-08 | | | | 0.01 | 0.05 | | |
| 24-09 | | | | | 0.05 | | |
| 24-10 | | | 0.005 | | | | |
| 24-1 | | | | 0.01 | | | pure |
| 24-12 | | | | 0.01 | | | methylated seed oil |

Velvetleaf (Abutilon theophrasti, ABUTH), Japanese millet (Echinochloa crus-galli, ECHCF) and prickly sida (Sida spinosa, SIDSP) plants were grown and treated by the standard procedures given above. Applications of spray compositions were made 14 days after planting ABUTH, 8 days after planting ECHCF and 21 days after planting SIDSP. Evaluation of herbicidal inhibition was done 12 days after application.

Standards included technical paraquat dichloride and Gramoxone, a commercial formulation of paraquat from Zeneca. Results, averaged for all replicates of each treatment, are shown in Table 1b.

**Table 1b**

| Spray composition | Paraquat rate | % Inhibition | | |
|---|---|---|---|---|
| | g a.i./ha | ABUTH | ECHCF | SIDSP |
| Paraquat dichloride | 25 | 50 | 83 | 55 |
| (technical) | 50 | 57 | 78 | 60 |
| | 100 | 73 | 84 | 69 |
| | 200 | 85 | 95 | 99 |
| Gramoxone | 25 | 40 | 72 | 40 |
| (commercial) | 50 | 60 | 70 | 52 |
| | 100 | 72 | 58 | 55 |
| | 200 | 72 | 89 | 63 |
| 25-01 | 25 | 75 | 93 | 67 |
| | 50 | 82 | 97 | 91 |
| | 100 | 95 | 98 | 97 |
| | 200 | 100 | 99 | 99 |
| 25-02 | 25 | 67 | 80 | 48 |
| | 50 | 68 | 87 | 65 |
| | 100 | 88 | 97 | 93 |
| | 200 | 96 | 99 | 98 |
| 25-03 | 25 | 55 | 65 | 42 |
| | 50 | 62 | 87 | 65 |
| | 100 | 83 | 96 | 93 |
| | 200 | 95 | 99 | 97 |
| 25-04 | 25 | 53 | 82 | 45 |
| | 50 | 63 | 94 | 53 |
| | 100 | 88 | 99 | 86 |
| | 200 | 92 | 99 | 98 |
| 25-05 | 25 | 58 | 67 | 50 |
| | 50 | 60 | 62 | 45 |
| | 100 | 70 | 73 | 62 |
| | 200 | 85 | 90 | 88 |
| 25-06 | 25 | 53 | 77 | 43 |
| | 50 | 60 | 92 | 40 |
| | 100 | 80 | 93 | 55 |
| | 200 | 96 | 99 | 78 |
| 25-07 | 25 | 65 | 80 | 45 |
| | 50 | 82 | 92 | 70 |
| | 100 | 96 | 96 | 89 |
| | 200 | 100 | 98 | 99 |
| 25-08 | 25 | 67 | 80 | 37 |
| | 50 | 82 | 90 | 71 |
| | 100 | 97 | 98 | 65 |
| | 200 | 99 | 99 | 93 |
| 25-09 | 25 | 72 | 90 | 50 |
| | 50 | 80 | 97 | 57 |
| | 100 | 91 | 99 | 94 |
| | 200 | 97 | 100 | 97 |
| 25-10 | 25 | 67 | 87 | 45 |
| | 50 | 68 | 75 | 57 |
| | 100 | 78 | 93 | 63 |
| | 200 | 82 | 97 | 82 |
| 25-11 | 25 | 65 | 80 | 45 |
| | 50 | 73 | 77 | 62 |
| | 100 | 90 | 95 | 62 |
| | 200 | 94 | 98 | 78 |
| 25-12 | 25 | 67 | 78 | 37 |
| | 50 | 75 | 90 | 55 |
| | 100 | 77 | 97 | 90 |
| | 200 | 85 | 99 | 92 |

Results of this test using paraquat as the exogenous chemical are summarized as follows:

Oleth-20 at the low concentration of 0.05% (25-09) gave extremely high effectiveness, superior to that obtained with the commercial standard. Addition of 0.005% butyl stearate (25-07) or 0.01% methyl oleate (25-08) did not provide further enhancement.

### EXAMPLE 2

Spray compositions were prepared containing acifluorfen sodium salt and excipient ingredients. Compositions 26-01 to 26-12 were exactly like compositions 24-01 to 24-12 respectively except that a different active ingredient was used and a range of active ingredient concentrations was selected appropriate to the active ingredient being applied.

Velvetleaf (Abutilon theophrasti, ABUTH), Japanese millet (Echinochloa crus-galli, ECHCF) and prickly sida (Sida spinosa, SIDSP) plants were grown and treated by the standard procedures given above. Applications of spray compositions were made 15 days after planting ABUTH, 9 days after planting ECHCF and 22 days after planting SIDSP. Evaluation of herbicidal inhibition was done 10 days after application.

Standards included technical acifluorfen sodium and Blazer, a commercial formulation of acifluorfen from Rohm & Haas. Results, averaged for all replicates of each treatment, are shown in Table 2.

**Table 2**

| Spray composition | Acifluorfen rate | % Inhibition | | |
|---|---|---|---|---|
| | g a.i./ha | ABUTH | ECHCF | SIDSP |
| Acifluorfen | 25 | 20 | 2 | 15 |
| (technical) | 50 | 32 | 7 | 17 |
| | 100 | 52 | 18 | 35 |
| | 200 | 62 | 35 | 40 |
| Blazer | 25 | 30 | 30 | 5 |
| (commercial) | 50 | 53 | 53 | 12 |
| | 100 | 55 | 55 | 7 |
| | 200 | 65 | 65 | 32 |
| 26-01 | 25 | 60 | 7 | 20 |
| | 50 | 63 | 20 | 20 |
| | 100 | 65 | 43 | 33 |
| | 200 | 80 | 70 | 48 |
| 26-02 | 25 | 25 | 7 | 5 |
| | 50 | 42 | 12 | 25 |
| | 100 | 60 | 30 | 22 |
| | 200 | 68 | 68 | 50 |
| 26-03 | 25 | 22 | 5 | 10 |
| | 50 | 55 | 7 | 33 |
| | 100 | 62 | 25 | 27 |
| | 200 | 65 | 55 | 48 |
| 26-04 | 25 | 57 | 7 | 13 |
| | 50 | 67 | 10 | 32 |
| | 100 | 67 | 35 | 32 |
| | 200 | 70 | 70 | 45 |
| 26-05 | 25 | 30 | 3 | 15 |
| | 50 | 47 | 27 | 27 |
| | 100 | 55 | 42 | 37 |
| | 200 | 65 | 60 | 38 |
| 26-06 | 25 | 28 | 0 | 3 |
| | 50 | 50 | 0 | 10 |
| | 100 | 55 | 30 | 25 |
| | 200 | 67 | 58 | 47 |
| 26-07 | 25 | 35 | 20 | 17 |
| | 50 | 55 | 35 | 27 |
| | 100 | 58 | 63 | 32 |
| | 200 | 67 | 67 | 55 |
| 26-08 | 25 | 40 | 20 | 8 |
| | 50 | 57 | 30 | 28 |
| | 100 | 60 | 60 | 30 |
| | 200 | 70 | 77 | 48 |
| 26-09 | 25 | 47 | 20 | 22 |
| | 50 | 55 | 35 | 35 |
| | 100 | 62 | 65 | 38 |
| | 200 | 68 | 82 | 50 |
| 26-10 | 25 | 28 | 0 | 5 |
| | 50 | 48 | 0 | 10 |
| | 100 | 53 | 5 | 25 |
| | 200 | 62 | 35 | 40 |
| 26-11 | 25 | 35 | 0 | 5 |
| | 50 | 43 | 0 | 30 |
| | 100 | 50 | 0 | 35 |
| | 200 | 65 | 43 | 47 |
| 26-12 | 25 | 40 | 5 | 5 |
| | 50 | 55 | 18 | 35 |
| | 100 | 60 | 47 | 38 |
| | 200 | 70 | 62 | 48 |

Results of this test using acifluorfen as the exogenous chemical are summarized as follows:

Oleth-20 at the low concentration of 0.05% (26-09) gave effectiveness superior to that obtained with the commercial standard. Addition of 0.005% butyl stearate (26-07) or 0.01% methyl oleate (26-08) did not provide further enhancement.

### EXAMPLE 3

Spray compositions were prepared containing asulam and excipient ingredients. Compositions 27-01 to 27-12 were exactly like compositions 24-01 to 24-12 respectively except that a different active ingredient was used and a range of active ingredient concentrations was selected appropriate to the active ingredient being applied.

Velvetleaf (Abutilon theophrasti, ABUTH), Japanese millet (Echinochloa crus-galli, ECHCF) and prickly sida (Sida spinosa, SIDSP) plants were grown and treated by the standard procedures given above. Applications of spray compositions were made 14 days after planting ABUTH, 11 days after planting ECHCF and 21 days after planting SIDSP. Evaluation of herbicidal inhibition was done 14 days after application.

Standards included technical asulam and Asulox, a commercial formulation of asulam from Rhône-Poulenc. Results, averaged for all replicates of each treatment, are shown in Table 3.

**Table 3**

| Spray composition | Asulam rate | % Inhibition | | |
|---|---|---|---|---|
| | g a.i./ha | ABUTH | ECHCF | SIDSP |
| Asulam | 200 | 0 | 12 | 0 |
| (technical) | 400 | 17 | 27 | 5 |
| | 800 | 48 | 32 | 20 |
| | 1400 | 42 | 50 | 37 |
| Asulox | 200 | 3 | 5 | 0 |
| (commercial) | 400 | 27 | 30 | 20 |
| | 800 | 52 | 45 | 25 |
| | 1400 | 50 | 60 | 40 |
| 27-01 | 200 | 5 | 8 | 13 |
| | 400 | 23 | 45 | 22 |
| | 800 | 50 | 50 | 30 |
| | 1400 | 60 | 65 | 48 |
| 27-02 | 200 | 0 | 20 | 17 |
| | 400 | 33 | 40 | 20 |
| | 800 | 47 | 48 | 33 |
| | 1400 | 53 | 68 | 55 |
| 27-03 | 200 | 3 | 20 | 3 |
| | 400 | 28 | 52 | 7 |
| | 800 | 50 | 50 | 23 |
| | 1400 | 50 | 58 | 43 |
| 27-04 | 200 | 3 | 40 | 7 |
| | 400 | 35 | 45 | 18 |
| | 800 | 52 | 50 | 25 |
| | 1400 | 58 | 60 | 42 |
| 27-05 | 200 | 0 | 10 | 3 |
| | 400 | 23 | 30 | 18 |
| | 800 | 33 | 50 | 32 |
| | 1400 | 45 | 57 | 38 |
| 27-06 | 200 | 2 | 30 | 10 |
| | 400 | 8 | 47 | 17 |
| | 800 | 50 | 55 | 28 |
| | 1400 | 52 | 63 | 40 |
| 27-07 | 200 | 0 | 43 | 3 |
| | 400 | 22 | 48 | 17 |
| | 800 | 40 | 55 | 28 |
| | 1400 | 52 | 60 | 33 |
| 27-08 | 200 | 7 | 47 | 22 |
| | 400 | 20 | 48 | 22 |
| | 800 | 53 | 55 | 30 |
| | 1400 | 57 | 60 | 33 |
| 27-09 | 200 | 0 | 45 | 7 |
| | 400 | 25 | 50 | 7 |
| | 800 | 53 | 60 | 32 |
| | 1400 | 55 | 63 | 37 |
| 27-10 | 200 | 22 | 37 | 10 |
| | 400 | 27 | 45 | 10 |
| | 800 | 50 | 43 | 23 |
| | 1400 | 52 | 52 | 27 |
| 27-11 | 200 | 25 | 33 | 5 |
| | 400 | 15 | 37 | 13 |
| | 800 | 48 | 42 | 25 |
| | 1400 | 42 | 52 | 28 |
| 27-12 | 200 | 3 | 25 | 17 |
| | 400 | 13 | 42 | 18 |
| | 800 | 50 | 45 | 30 |
| | 1400 | 52 | 50 | 33 |

Results of this test using asulam as the exogenous chemical are summarized as follows:

Oleth-20 at the low concentration of 0.05% (27-09) gave, at low exogenous chemical rates, effectiveness on ECHCF superior to that obtained with the commercial standard. Addition of 0.005% butyl stearate (27-07) or 0.01% methyl oleate (27-08) did not provide further enhancement.

### EXAMPLE 4

Spray compositions were prepared containing dicamba sodium salt and excipient ingredients. Compositions 28-01 to 28-12 were exactly like compositions 24-01 to 24-12 respectively except that a different active ingredient was used and a range of active ingredient concentrations was selected appropriate to the active ingredient being applied.

Velvetleaf (Abutilon theophrasti, ABUTH), Japanese millet (Echinochloa crus-galli, ECHCF) and prickly sida (Sida spinosa, SIDSP) plants were grown and treated by the standard procedures given above. Applications of spray compositions were made 14 days after planting ABUTH, 8 days after planting ECHCF and 21 days after planting SIDSP. Evaluation of herbicidal inhibition was done 17 days after application.

Standards included technical dicamba sodium and Banvel, a commercial formulation of dicamba from Sandoz. Results, averaged for all replicates of each treatment, are shown in Table 4.

**Table 4**

| Spray composition | Dicamba rate | % Inhibition | | |
|---|---|---|---|---|
| | g a.i./ha | ABUTH | ECHCF | SIDSP |
| Dicamba | 25 | 47 | 0 | 30 |
| (technical) | 50 | 63 | 0 | 40 |
| | 100 | 82 | 0 | 50 |
| | 200 | 93 | 5 | 58 |
| Banvel | 25 | 47 | 0 | 35 |
| (commercial) | 50 | 68 | 0 | 40 |
| | 100 | 91 | 0 | 53 |
| | 200 | 93 | 3 | 63 |
| 28-01 | 25 | 42 | 0 | 38 |
| | 50 | 67 | 0 | 48 |
| | 100 | 92 | 0 | 67 |
| | 200 | 93 | 3 | 73 |
| 28-02 | 25 | 43 | 0 | 43 |
| | 50 | 58 | 0 | 50 |
| | 100 | 85 | 0 | 62 |
| | 200 | 89 | 8 | 72 |
| 28-03 | 25 | 50 | 0 | 32 |
| | 50 | 65 | 0 | 45 |
| | 100 | 90 | 0 | 60 |
| | 200 | 94 | 13 | 68 |
| 28-04 | 25 | 43 | 0 | 35 |
| | 50 | 65 | 0 | 42 |
| | 100 | 94 | 0 | 53 |
| | 200 | 94 | 13 | 67 |
| 28-05 | 25 | 50 | 0 | 35 |
| | 50 | 68 | 0 | 40 |
| | 100 | 88 | 0 | 53 |
| | 200 | 92 | 15 | 60 |
| 28-06 | 25 | 40 | 0 | 40 |
| | 50 | 65 | 0 | 45 |
| | 100 | 88 | 0 | 52 |
| | 200 | 92 | 8 | 70 |
| 28-07 | 25 | 45 | 0 | 42 |
| | 50 | 57 | 0 | 45 |
| | 100 | 88 | 0 | 62 |
| | 200 | 88 | 20 | 68 |
| 28-08 | 25 | 40 | 0 | 38 |
| | 50 | 62 | 0 | 45 |
| | 100 | 97 | 18 | 62 |
| | 200 | 93 | 17 | 73 |
| 28-09 | 25 | 33 | 0 | 35 |
| | 50 | 60 | 0 | 45 |
| | 100 | 93 | 0 | 63 |
| | 200 | 96 | 15 | 73 |
| 28-10 | 25 | 35 | 0 | 30 |
| | 50 | 57 | 0 | 43 |
| | 100 | 90 | 0 | 50 |
| | 200 | 90 | 3 | 70 |
| 28-11 | 25 | 45 | 0 | 30 |
| | 50 | 53 | 0 | 42 |
| | 100 | 89 | 0 | 55 |
| | 200 | 92 | 0 | 73 |
| 28-12 | 25 | 38 | 0 | 37 |
| | 50 | 60 | 0 | 45 |
| | 100 | 96 | 0 | 52 |
| | 200 | 93 | 0 | 70 |

Results of this test using dicamba as the exogenous chemical are summarized as follows:

Oleth-20 at the low concentration of 0.05% (28-09) gave effectiveness on SIDSP superior to that obtained with the commercial standard. Addition of 0.005% butyl stearate (28-07) or 0.01% methyl oleate (28-08) did not provide significant further enhancement.

### EXAMPLE 5

Spray compositions were prepared containing metsulfuron-methyl and excipient ingredients. Compositions 29-01 to 29-12 were exactly like compositions 24-01 to 24-12 respectively except that a different active ingredient was used and a range of active ingredient concentrations was selected appropriate to the active ingredient being applied.

Velvetleaf (Abutilon theophrasti, ABUTH), Japanese millet (Echinochloa crus-galli, ECHCF) and prickly sida (Sida spinosa, SIDSP) plants were grown and treated by the standard procedures given above. Applications of spray compositions were made 14 days after planting ABUTH, 8 days after planting ECHCF and 21 days after planting SIDSP. Evaluation of herbicidal inhibition was done 14 days after application.

Standards included technical metsulfuron-methyl and Ally, a commercial formulation of metsulfuron from Du Pont. Results, averaged for all replicates of each treatment, are shown in Table 5.

**Table 5**

| Spray composition | Metsulfuron rate | % Inhibition | | |
|---|---|---|---|---|
| | g a.i./ha | ABUTH | ECHCF | SIDSP |
| Metsulfuron | 0.5 | 72 | 0 | 5 |
| (technical) | 1 | 90 | 0 | 23 |
| | 5 | 96 | 0 | 50 |
| | 10 | 97 | 30 | 55 |
| Ally | 0.5 | 75 | 0 | 5 |
| (commercial) | 1 | 85 | 0 | 22 |
| | 5 | 95 | 0 | 42 |
| | 10 | 97 | 25 | 53 |
| 29-01 | 0.5 | 95 | 0 | 47 |
| | 1 | 96 | 20 | 53 |
| | 5 | 97 | 25 | 62 |
| | 10 | 98 | 45 | 62 |
| 29-02 | 0.5 | 87 | 0 | 40 |
| | 1 | 90 | 10 | 55 |
| | 5 | 95 | 10 | 58 |
| | 10 | 96 | 40 | 63 |
| 29-03 | 0.5 | 87 | 0 | 27 |
| | 1 | 90 | 0 | 40 |
| | 5 | 96 | 10 | 57 |
| | 10 | 97 | 33 | 63 |
| 29-04 | 0.5 | 90 | 0 | 33 |
| | 1 | 95 | 10 | 50 |
| | 5 | 98 | 17 | 62 |
| | 10 | 99 | 28 | 58 |
| 29-05 | 0.5 | 85 | 0 | 27 |
| | 1 | 90 | 0 | 33 |
| | 5 | 95 | 0 | 47 |
| | 10 | 95 | 13 | 60 |
| 29-06 | 0.5 | 77 | 0 | 30 |
| | 1 | 89 | 10 | 47 |
| | 5 | 96 | 17 | 62 |
| | 10 | 98 | 33 | 60 |
| 29-07 | 0.5 | 94 | 0 | 55 |
| | 1 | 97 | 10 | 60 |
| | 5 | 98 | 43 | 60 |
| | 10 | 97 | 55 | 65 |
| 29-08 | 0.5 | 93 | 0 | 55 |
| | 1 | 96 | 5 | 58 |
| | 5 | 97 | 42 | 60 |
| | 10 | 97 | 50 | 60 |
| 29-09 | 0.5 | 93 | 0 | 55 |
| | 1 | 97 | 10 | 62 |
| | 5 | 98 | 55 | 62 |
| | 10 | 98 | 65 | 63 |
| 29-10 | 0.5 | 85 | 0 | 28 |
| | 1 | 82 | 0 | 30 |
| | 5 | 95 | 10 | 52 |
| | 10 | 96 | 17 | 57 |
| 29-11 | 0.5 | 73 | 0 | 25 |
| | 1 | 88 | 20 | 28 |
| | 5 | 94 | 25 | 53 |
| | 10 | 96 | 32 | 57 |
| 29-12 | 0.5 | 75 | 0 | 32 |
| | 1 | 85 | 20 | 37 |
| | 5 | 94 | 23 | 55 |
| | 10 | 96 | 25 | 57 |

Results of this test using metsulfuron as the exogenous chemical are summarized as follows:

Oleth-20 at the low concentration of 0.05% (29-09) gave high effectiveness, superior to that obtained with the commercial standard. Addition of 0.005% butyl stearate (29-07) or 0.01% methyl oleate (29-08) did not provide further enhancement.

### EXAMPLE 6

Spray compositions were prepared containing imazethapyr and excipient ingredients. Compositions 30-01 to 30-12 were exactly like compositions 24-01 to 24-12 respectively except that a different active ingredient was used and a range of active ingredient concentrations was selected appropriate to the active ingredient being applied.

Velvetleaf (Abutilon theophrasti, ABUTH), Japanese millet (Echinochloa crus-galli, ECHCF) and prickly sida (Sida spinosa, SIDSP) plants were grown and treated by the standard procedures given above. Applications of spray compositions were made 14 days after planting ABUTH, 14 days after planting ECHCF and 21 days after planting SIDSP. Evaluation of herbicidal inhibition was done 14 days after application.

Standards included technical imazethapyr and Pursuit, a commercial formulation of imazethapyr from American Cyanamid. Results, averaged for all replicates of each treatment, are shown in Table 6.

**Table 6**

| Spray composition | Imazethapyr rate | % Inhibition | | |
|---|---|---|---|---|
| | g a.i./ha | ABUTH | ECHCF | SIDSP |
| Imazethapyr | 5 | 78 | 5 | 20 |
| (technical) | 10 | 83 | 20 | 30 |
| | 25 | 93 | 35 | 40 |
| | 50 | 94 | 53 | 50 |
| Pursuit | 5 | 70 | 5 | 25 |
| (commercial) | 10 | 73 | 33 | 30 |
| | 25 | 90 | 50 | 42 |
| | 50 | 93 | 62 | 57 |
| 30-01 | 5 | 70 | 45 | 35 |
| | 10 | 75 | 62 | 52 |
| | 25 | 92 | 63 | 57 |
| | 50 | 93 | 72 | 62 |
| 30-02 | 5 | 73 | 57 | 32 |
| | 10 | 75 | 67 | 43 |
| | 25 | 90 | 70 | 52 |
| | 50 | 92 | 72 | 57 |
| 30-03 | 5 | 70 | 42 | 27 |
| | 10 | 78 | 42 | 35 |
| | 25 | 90 | 53 | 45 |
| | 50 | 92 | 62 | 52 |
| 30-04 | 5 | 73 | 55 | 33 |
| | 10 | 77 | 68 | 45 |
| | 25 | 93 | 68 | 47 |
| | 50 | 94 | 68 | 60 |
| 30-05 | 5 | 73 | 47 | 32 |
| | 10 | 73 | 45 | 40 |
| | 25 | 90 | 62 | 47 |
| | 50 | 91 | 68 | 52 |
| 30-06 | 5 | 78 | 72 | 30 |
| | 10 | 83 | 70 | 35 |
| | 25 | 93 | 77 | 62 |
| | 50 | 94 | 78 | 58 |
| 30-07 | 5 | 82 | 75 | 38 |
| | 10 | 90 | 90 | 52 |
| | 25 | 93 | 93 | 53 |
| | 50 | 97 | 97 | 62 |
| 30-08 | 5 | 75 | 77 | 38 |
| | 10 | 90 | 92 | 50 |
| | 25 | 95 | 93 | 57 |
| | 50 | 97 | 99 | 63 |
| 30-09 | 5 | 78 | 80 | 40 |
| | 10 | 83 | 89 | 63 |
| | 25 | 93 | 93 | 62 |
| | 50 | 96 | 93 | 60 |
| 30-10 | 5 | 85 | 50 | 37 |
| | 10 | 77 | 50 | 45 |
| | 25 | 91 | 63 | 48 |
| | 50 | 93 | 75 | 57 |
| 30-11 | 5 | 75 | 38 | 43 |
| | 10 | 80 | 38 | 37 |
| | 25 | 92 | 62 | 45 |
| | 50 | 93 | 73 | 53 |
| 30-12 | 5 | 75 | 55 | 38 |
| | 10 | 83 | 60 | 43 |
| | 25 | 92 | 67 | 53 |
| | 50 | 93 | 77 | 55 |

Results of this test using imazethapyr as the exogenous chemical are summarized as follows:

Oleth-20 at the low concentration of 0.05% (30-09) gave extremely high effectiveness, greatly superior to that obtained with the commercial standard, especially on ECHCF. Addition of 0.005% butyl stearate (30-07) further enhanced performance of low exogenous chemical rates on ABUTH more effectively than addition of 0.01% methyl oleate (30-08).

### EXAMPLE 7

Spray compositions were prepared containing fluazifop-p-butyl salt and excipient ingredients. Compositions 31-01 to 31-12 were exactly like compositions 24-01 to 24-12 respectively except that a different active ingredient was used and a range of active ingredient concentrations was selected appropriate to the active ingredient being applied.

Velvetleaf (Abutilon theophrasti, ABUTH), Japanese millet (Echinochloa crus-galli, ECHCF) and broadleaf signalgrass (Brachiaria platyphylla, BRAPP) plants were grown and treated by the standard procedures given above. Applications of spray compositions were made 15 days after planting ABUTH, 15 days after planting ECHCF and 16 days after planting BRAPP. Evaluation of herbicidal inhibition was done 10 days after application.

Standards included technical fluazifop-p-butyl and Fusilade 5, a commercial formulation of fluazifop-p-butyl from Zeneca. Results, averaged for all replicates of each treatment, are shown in Table 7.

**Table 7**

| Spray composition | Fluazifop-p rate | % Inhibition | | |
|---|---|---|---|---|
| | g a.i./ha | ABUTH | ECHCF | BRAPP |
| Fluazifop-p-butyl | 2 | 0 | 0 | 20 |
| (technical) | 5 | 0 | 3 | 35 |
| | 15 | 5 | 45 | 65 |
| | 30 | 5 | 57 | 78 |
| Fusilade 5 | 2 | 0 | 0 | 27 |
| (commercial) | 5 | 0 | 27 | 33 |
| | 15 | 5 | 52 | 78 |
| | 30 | 7 | 75 | 85 |
| 31-01 | 2 | 0 | 0 | 20 |
| | 5 | 2 | 27 | 30 |
| | 15 | 5 | 58 | 78 |
| | 30 | 10 | 87 | 83 |
| 31-02 | 2 | 0 | 7 | 25 |
| | 5 | 0 | 35 | 30 |
| | 15 | 2 | 58 | 75 |
| | 30 | 8 | 78 | 75 |
| 31-03 | 2 | 0 | 0 | 18 |
| | 5 | 0 | 8 | 27 |
| | 15 | 0 | 45 | 75 |
| | 30 | 0 | 55 | 75 |
| 31-04 | 2 | 0 | 20 | 32 |
| | 5 | 2 | 42 | 25 |
| | 15 | 2 | 55 | 72 |
| | 30 | 5 | 80 | 78 |
| 31-05 | 2 | 0 | 13 | 32 |
| | 5 | 2 | 42 | 32 |
| | 15 | 2 | 55 | 72 |
| | 30 | 7 | 58 | 73 |
| 31-06 | 2 | 2 | 17 | 23 |
| | 5 | 0 | 20 | 25 |
| | 15 | 0 | 50 | 75 |
| | 30 | 0 | 73 | 77 |
| 31-07 | 2 | 0 | 50 | 40 |
| | 5 | 0 | 52 | 60 |
| | 15 | 0 | 67 | 80 |
| | 30 | 0 | 92 | 85 |
| 31-08 | 2 | 0 | 43 | 35 |
| | 5 | 0 | 55 | 37 |
| | 15 | 7 | 88 | 82 |
| | 30 | 3 | 96 | 85 |
| 31-09 | 2 | 0 | 47 | 18 |
| | 5 | 0 | 50 | 35 |
| | 15 | 0 | 80 | 80 |
| | 30 | 3 | 93 | 85 |
| 31-10 | 2 | 0 | 23 | 10 |
| | 5 | 0 | 37 | 42 |
| | 15 | 5 | 55 | 75 |
| | 30 | 10 | 58 | 80 |
| 31-11 | 2 | 0 | 7 | 10 |
| | 5 | 0 | 30 | 28 |
| | 15 | 0 | 50 | 62 |
| | 30 | 12 | 53 | 68 |
| 31-12 | 2 | 0 | 5 | 20 |
| | 5 | 0 | 7 | 35 |
| | 15 | 5 | 48 | 68 |
| | 30 | 12 | 60 | 77 |

Results of this test using fluazifop-p-butyl as the exogenous chemical are summarized as follows:

Oleth-20 at the low concentration of 0.05% (31-09) gave extremely high effectiveness on ECHCF, superior to that obtained with the commercial standard. Addition of 0.005% butyl stearate (31-07) or 0.01% methyl oleate (31-08) did not provide significant further enhancement.

### EXAMPLE 8

Spray compositions were prepared containing alachlor and excipient ingredients. Compositions 32-01 to 32-12 were exactly like compositions 24-01 to 24-12 respectively except that a different active ingredient was used and a range of active ingredient concentrations was selected appropriate to the active ingredient being applied.

Velvetleaf(Abutilon theophrasti, ABUTH), Japanese millet (Echinochloa crus-galli, ECHCF) and prickly sida (Sida spinosa, SIDSP) plants were grown and treated by the standard procedures given above. Applications of spray compositions were made 14 days after planting ABUTH, 8 days after planting ECHCF and 14 days after planting SIDSP. Evaluation of herbicidal inhibition was done 9 days after application.

Standards included technical alachlor and Lasso, a commercial formulation of alachlor from Monsanto Company. Results, averaged for all replicates of each treatment, are shown in Table 8.

**Table 8**

| Spray composition | Alachlor rate | % Inhibition | | |
|---|---|---|---|---|
| | g a.i./ha | ABUTH | ECHCF | SIDSP |
| Alachlor | 500 | 0 | 0 | 0 |
| (technical) | 1000 | 0 | 0 | 0 |
| | 2000 | 0 | 0 | 0 |
| | 4000 | 0 | 0 | 0 |
| Lasso | 500 | 0 | 0 | 0 |
| (commercial) | 1000 | 0 | 5 | 13 |
| | 2000 | 0 | 30 | 17 |
| | 4000 | 15 | 43 | 65 |
| 32-01 | 500 | 0 | 0 | 0 |
| | 1000 | 0 | 0 | 0 |
| | 2000 | 0 | 0 | 0 |
| | 4000 | 10 | 0 | 7 |
| 32-02 | 500 | 0 | 0 | 0 |
| | 1000 | 0 | 0 | 0 |
| | 2000 | 0 | 22 | 7 |
| | 4000 | 12 | 47 | 12 |
| 32-03 | 500 | 0 | 0 | 0 |
| | 1000 | 0 | 0 | 0 |
| | 2000 | 0 | 0 | 0 |
| | 4000 | 10 | 0 | 0 |
| 32-04 | 500 | 0 | 0 | 0 |
| | 1000 | 0 | 0 | 0 |
| | 2000 | 0 | 0 | 0 |
| | 4000 | 5 | 0 | 15 |
| 32-05 | 500 | 0 | 0 | 0 |
| | 1000 | 0 | 0 | 0 |
| | 2000 | 0 | 0 | 0 |
| | 4000 | 3 | 0 | 5 |
| 32-06 | 500 | 0 | 0 | 0 |
| | 1000 | 0 | 0 | 0 |
| | 2000 | 0 | 13 | 7 |
| | 4000 | 0 | 37 | 12 |
| 32-07 | 500 | 0 | 0 | 0 |
| | 1000 | 0 | 8 | 0 |
| | 2000 | 0 | 28 | 15 |
| | 4000 | 12 | 50 | 20 |
| 32-08 | 500 | 0 | 0 | 0 |
| | 1000 | 0 | 8 | 0 |
| | 2000 | 0 | 8 | 0 |
| | 4000 | 5 | 20 | 5 |
| 32-09 | 500 | 0 | 0 | 0 |
| | 1000 | 0 | 0 | 0 |
| | 2000 | 0 | 3 | 0 |
| | 4000 | 12 | 42 | 32 |
| 32-10 | 500 | 0 | 0 | 0 |
| | 1000 | 0 | 0 | 0 |
| | 2000 | 0 | 0 | 0 |
| | 4000 | 0 | 0 | 0 |
| 32-11 | 500 | 0 | 0 | 0 |
| | 1000 | 0 | 0 | 0 |
| | 2000 | 0 | 0 | 0 |
| | 4000 | 0 | 0 | 0 |
| 32-12 | 500 | 0 | 0 | 0 |
| | 1000 | 0 | 0 | 0 |
| | 2000 | 0 | 0 | 0 |
| | 4000 | 0 | 0 | 0 |

None of the compositions tested enhanced post-emergence foliar-applied herbicidal effectiveness of alachlor in this test. Alachlor is not known as a foliar-applied herbicide.

### EXAMPLE 9

Spray compositions were prepared containing glufosinate ammonium salt and excipient ingredients. Compositions 33-01 to 33-12 were exactly like compositions 24-01 to 24-12 respectively except that a different active ingredient was used and a range of active ingredient concentrations was selected appropriate to the active ingredient being applied.

Velvetleaf (Abutilon theophrasti, ABUTH), Japanese millet (Echinochloa crus-galli, ECHCF) and prickly sida (Sida spinosa, SIDSP) plants were grown and treated by the standard procedures given above. Applications of spray compositions were made 14 days after planting ABUTH, 10 days after planting ECHCF and 17 days after planting SIDSP. Evaluation of herbicidal inhibition was done 11 days after application.

Standards included technical glufosinate ammonium and Liberty, a commercial formulation of glufosinate from AgrEvo. Results, averaged for all replicates of each treatment, are shown in Table 9.

**Table 9**

| Spray composition | Glufosinate rate | % Inhibition | | |
|---|---|---|---|---|
| | g a.i./ha | ABUTH | ECHCF | SIDSP |
| Glufosinate | 50 | 0 | 0 | 5 |
| (technical) | 100 | 47 | 0 | 10 |
| | 300 | 90 | 23 | 96 |
| | 600 | 98 | 43 | 94 |
| Liberty | 50 | 77 | 70 | 20 |
| (commercial) | 100 | 88 | 96 | 93 |
| | 300 | 98 | 100 | 97 |
| | 600 | 99 | 100 | 99 |
| 33-01 | 50 | 77 | 33 | 70 |
| | 100 | 95 | 58 | 93 |
| | 300 | 98 | 95 | 97 |
| | 600 | 99 | 99 | 98 |
| 33-02 | 50 | 33 | 30 | 50 |
| | 100 | 63 | 32 | 93 |
| | 300 | 96 | 52 | 90 |
| | 600 | 98 | 96 | 97 |
| 33-03 | 50 | 15 | 30 | 38 |
| | 100 | 50 | 33 | 87 |
| | 300 | 92 | 40 | 94 |
| | 600 | 98 | 70 | 98 |
| 33-04 | 50 | 92 | 47 | 50 |
| | 100 | 90 | 53 | 85 |
| | 300 | 98 | 98 | 96 |
| | 600 | 98 | 99 | 98 |
| 33-05 | 50 | 35 | 20 | 20 |
| | 100 | 37 | 30 | 20 |
| | 300 | 97 | 45 | 78 |
| | 600 | 91 | 53 | 92 |
| 33-06 | 50 | 10 | 0 | 20 |
| | 100 | 20 | 3 | 20 |
| | 300 | 89 | 47 | 82 |
| | 600 | 91 | 94 | 89 |
| 33-07 | 50 | 50 | 35 | 70 |
| | 100 | 73 | 52 | 80 |
| | 300 | 95 | 87 | 98 |
| | 600 | 98 | 98 | 97 |
| 33-08 | 50 | 48 | 30 | 88 |
| | 100 | 83 | 50 | 93 |
| | 300 | 98 | 97 | 96 |
| | 600 | 98 | 99 | 96 |
| 33-09 | 50 | 58 | 35 | 92 |
| | 100 | 91 | 62 | 93 |
| | 300 | 98 | 96 | 97 |
| | 600 | 98 | 99 | 96 |
| 33-10 | 50 | 30 | 30 | 0 |
| | 100 | 43 | 35 | 10 |
| | 300 | 96 | 43 | 92 |
| | 600 | 95 | 70 | 91 |
| 33-11 | 50 | 33 | 35 | 0 |
| | 100 | 53 | 35 | 7 |
| | 300 | 96 | 43 | 89 |
| | 600 | 97 | 88 | 93 |
| 33-12 | 50 | 37 | 5 | 5 |
| | 100 | 37 | 20 | 10 |
| | 300 | 95 | 40 | 88 |
| | 600 | 97 | 85 | 93 |

Results of this test using glufosinate as the exogenous chemical are summarized as follows:

Oleth-20 at the low concentration of 0.05% (33-09) gave extremely high effectiveness, superior on SIDSP to that obtained with the commercial standard. Addition of 0.005% butyl stearate (33-07) or 0.01% methyl oleate (33-08) did not provide further enhancement.

## Claims

1. A plant treatment composition comprising (a) a non-glyphosate exogenous chemical selected from as herbicide, a pneumaticide, a plant growth regulate and (b) an alkylether surfactant or mixture of such surfactants having the formula
R¹²-O-(CH₂CH₂O)ₙ(CH(CH₃)CH₂O)ₘ-R¹³
wherein R¹² is an alkyl or alkenyl group having 16 to 22 carbon atoms, n is an average number of 20 to 100, m is an average number of 0 to 5, and R¹³ is hydrogen or C₁₋₄ alkyl, present in an amount such that the weight/weight ratio of said alkylether surfactant or mixture of such surfactants to the exogenous chemical is 1:3 to 1:100.

2. The composition of claim 1, wherein m is 0 and R¹³ is hydrogen.

3. The composition of claim 1, wherein n is from 20 to 40.

4. The composition of claim 2, wherein R¹² is a saturated straight-chain alkyl group.

5. The composition of claim 4, wherein the alkylether surfactant is a cetyl or stearyl ether or mixture thereof.

6. The composition of any of claims 1 - 5, further comprising water and an amount of a solid inorganic particulate colloidal material effective to stabilize the composition, said composition not exhibiting phase separation over a period of time T when stored in a closed container at a temperature in the range from 15°C to 30°C, T being in the range from 1 hour to 60 days; wherein the exogenous chemical and the surfactant are present at concentrations in the absolute or relative to each other such that, in the absence of the colloidal material, phase separation would occur during said period of time T.

7. The composition of claim 6 wherein the colloidal material comprises particulates selected from the group consisting of silicon oxides, aluminum oxides, titanium oxides, and mixtures thereof.

8. The composition of claim 6 wherein the particulate colloidal material has an average specific surface area of 50 to 400 m²/g.

9. The composition of claim 6 wherein the particulate colloidal material has an average specific surface area of 180 to 400 m²/g.

10. The composition of claim 6 wherein the particulate colloidal material has a bimodal distribution of specific surface area whereby a first component of the colloidal material has an average specific surface area of 50 to 150 m²/g and a second component of the colloidal material has an average specific surface area of 180 to 400 m²/g.

11. The composition of any of claims 1 - 10, further comprising a compound of formula
R¹⁴-CO-A-R¹⁵
selected from an herbicide, a nematicide, a plant growth regulator wherein R¹⁴ is a hydrocarbyl group having 5 to 21 carbon atoms, R¹⁵ is a hydrocarbyl group having 1 to 14 carbon atoms, the total number of carbon atoms in R¹⁴ and R¹⁵ is 11 to 27, and A is O or NH.

12. The composition of claim 11 wherein said compound is a C₁₋₄ alkyl ester of a, optionally saturated C₁₂₋₁₈ fatty acid.

13. The composition of claim 11 or 12 wherein said compound is a propyl, isopropyl or butyl ester of a C₁₂₋₁₈ fatty acid.

14. The composition of any of claims 11 - 13 wherein said compound is butyl stearate.

15. The composition of any of claims 1 - 14 wherein the exogenous chemical is a foliar-applied exogenous chemical.

16. The composition of any of claims 1 - 14 wherein the herbicide is selected from the group consisting of acetanilides, bipyridyls, cyclohexenones, dinitroanilines, diphenylethers, fatty acids, hydroxybenzonitriles, imidazolinones, phenoxies, phenoxypropionates, substituted ureas, sulfonylureas, thiocarbamates and triazines, acetochlor, alachlor, metolachlor, aminotriazole, asulam, bentazon, bialaphos, diquat, paraquat, bromacil, clethodim, sethoxydim, dicamba, diflufenican, pendimethalin, acifluorfen, C₉₋₁₀ fatty acids, fomesafen, oxyfluorfen, fosamine, flupoxam, glufosinate, bromoxynil, imazaquin, imazethapyr, isoxaben, norflurazon, 2,4-D, diclofop, fluazifop, quizalofop, picloram, propanil, fluometuron, isoproturon, chlorimuron, chlorsulfuron, halosulfuron, metsulfuron, primisulfuron, sulfometuron, sulfosulfuron, triallate, atrazine, metribuzin, triclopyr, salt or ester thereof.

17. The composition of any of claims 1 - 16 wherein the exogenous chemical is water-soluble.

18. The composition of any of claims 1 - 17 wherein the exogenous chemical is a salt having an anion portion and a cation portion.

19. The composition of claim 18 wherein at least one of said anion and cation portions is biologically active and has a molecular weight of less than about 300.

20. The composition of claim 19 wherein the exogenous chemical is paraquat or diquat.

21. The composition of claim 19 wherein the exogenous chemical exhibits systemic biological activity in the plant.

22. The composition of claim 21 wherein the exogenous chemical has one or more functional groups selected from the group consisting of amine, amide, carboxylate, phosphonate and phosphinate groups.

23. The composition of claim 22 wherein the exogenous chemical is a salt of 3,4,4-trifluoro-3-butenoic acid or of N-(3,4,4-trifluoro-1-oxo-3-butenyl)glycine that exhibits nematicidal activity.

24. The composition of claim 22 wherein the exogenous chemical is a herbicidal or plant growth regulating compound having at least one of each of amine, carboxylate and either phosphonate or phosphinate functional groups.

25. The composition of claim 24 wherein the herbicidal or plant growth regulating compound is a salt of glufosinate, preferably the ammonium salt.

26. The composition of any of claims 1-25, further comprising water in an amount effective to make the composition a dilute aqueous composition ready for application to foliage of a plant.

27. The composition of any of claims 1-25, wherein the composition is a shelf-stable concentrate composition comprising the exogenous chemical in an amount of 15 to 90 percent by weight.

28. The composition of claim 27, wherein the composition is a solid composition comprising the exogenous chemical substance in an amount of 30 to 90 percent by weight.

29. The composition of claim 28, wherein the composition is a water-soluble or water-dispersible granular formulation.

30. The composition of claim 27, further comprising a liquid diluent, and wherein the composition comprises the exogenous chemical substance in an amount of 15 to 60 percent by weight.

31. The composition of claim 30 wherein the exogenous chemical substance is water-soluble and is present in an aqueous phase of the composition in an amount of 15 to 45 percent by weight of the composition.

32. The composition of claim 31, wherein the composition is an emulsion having an oil phase.

33. The composition of claim 32, wherein the composition is an oil-in-water emulsion.

34. The composition of claim 32, wherein the composition is a water-in-oil emulsion.

35. The composition of claim 32, wherein the composition is a water-in-oil-in-water multiple emulsion.

36. A plant treatment method, comprising contacting foliage or locus of a plant with a biologically effective amount of a composition according to any of claims 1 to 35.

## Patentansprüche

1. Pflanzenbehandlungszusammensetzung, umfassend (a) eine exogene nicht-Glyphosat-Chemikalie, ausgewählt aus einem Herbizid, einem Nematizid, einem Pflanzenwachstumsregulator, und (b) ein Alkylether-Tensid oder eine Mischung solcher Tenside mit der Formel
R¹²-O-(CH₂CH₂O)ₙ(CH(CH₃)CH₂O)ₘ-R¹³
worin R¹² eine Alkyl- oder Alkenylgruppe mit 16 bis 22 Kohlenstoffatomen darstellt, n eine durchschnittliche Zahl von 20 bis 100 ist, m eine durchschnittliche Zahl von 0 bis 5 darstellt und R¹³ Wasserstoff oder C₁₋₄-Alkyl darstellt, welche(s) in einer derartigen Menge vorliegt, dass das Gewichts/Gewichts-Verhältnis des Alkylether-Tensids oder der Mischung solcher Tenside zu der exogenen Chemikalie 1:3 bis 1:100 beträgt.

2. Zusammensetzung nach Anspruch 1, worin m 0 ist und R¹³ Wasserstoff darstellt.

3. Zusammensetzung nach Anspruch 1, worin n von 20 bis 40 reicht.

4. Zusammensetzung nach Anspruch 2, worin R¹² eine gesättigte geradkettige Alkylgruppe ist.

5. Zusammensetzung nach Anspruch 4, worin das Alkylether-Tensid ein Cetyl- oder Stearylether oder eine Mischung davon darstellt.

6. Zusammensetzung nach einem der Ansprüche 1 bis 5, weiterhin umfassend Wasser sowie eine Menge eines festen anorganischen teilchenförmigen kolloidalen Materials, welches zur Stabilisierung der Zusammensetzung in der Lage ist, wobei die Zusammensetzung keine Phasentrennung innerhalb einer Zeitdauer T zeigt, wenn sie in einem geschlossenen Behälter bei einer Temperatur in dem Bereich von 15°C bis 30°C gelagert wird, wobei T in dem Bereich von 1 Stunde bis 60 Tagen liegt; worin die exogene Chemikalie und das Tensid in Konzentrationen absolut oder relativ zueinander vorliegen, sodass in Abwesenheit des kolloidalen Materials eine Phasentrennung während der Zeitdauer T auftreten würde.

7. Zusammensetzung nach Anspruch 6, worin das kolloidale Material Teilchen umfasst, ausgewählt aus der Gruppe, bestehend aus Siliciumoxiden, Aluminiumoxiden, Titanoxiden und Mischungen davon.

8. Zusammensetzung nach Anspruch 6, worin das teilchenförmige kolloidale Material eine mittlere spezifische Oberfläche von 50 bis 400 m²/g aufweist.

9. Zusammensetzung nach Anspruch 6, worin das teilchenförmige kolloidale Material eine mittlere spezifische Oberfläche von 180 bis 400 m²/g aufweist.

10. Zusammensetzung nach Anspruch 6, worin das teilchenförmige kolloidale Material eine bimodale Verteilung der spezifischen Oberfläche aufweist, wobei eine erste Komponente des kolloidalen Materials eine mittlere spezifische Oberfläche von 50 bis 150 m²/g und eine zweite Komponente des kolloidalen Materials eine mittlere spezifische Oberfläche von 180 bis 400 m²/g aufweist.

11. Zusammensetzung nach einem der Ansprüche 1 bis 10, weiterhin umfassend eine Verbindung der Formel
R¹⁴-CO-A-R¹⁵
worin R¹⁴ eine Kohlenwasserstoffgruppe mit 5 bis 21 Kohlenstoffatomen darstellt, R¹⁵ eine Kohlenwasserstoffgruppe mit 1 bis 14 Kohlstoffatomen darstellt, die Gesamtanzahl der Kohlenstoffatome in R¹⁴ und R¹⁵ 11 bis 27 ist und A O der NH darstellt.

12. Zusammensetzung nach Anspruch 11, worin die Verbindung ein C₁₋₄-Alkylester einer wahlweise gesättigten C₁₂₋₁₈-Fettsäure darstellt.

13. Zusammensetzung nach Anspruch 11 oder Anspruch 12, worin die Verbindung ein Propyl-, Isopropyl- oder Butylester einer C₁₂₋₁₈-Fettsäure darstellt.

14. Zusammensetzung nach einem der Ansprüche 11 bis 13, worin die Verbindung Butylstearat ist.

15. Zusammensetzung nach einem der Ansprüche 1 bis 14, worin die exogene Chemikalie eine auf dem Blatt angewendete exogene Chemikalie darstellt.

16. Zusammensetzung nach einem der Ansprüche 1 bis 14, worin das Herbizid ausgewählt ist aus der Gruppe, bestehend aus Acetaniliden, Bipyridylen, Cyclohexenonen, Dinitroanilinen, Diphenylethern. Fettsäuren, Hydroxybenzonitrilen, Imidazolinonen, Phenoxiden, Phenoxypropionaten, substituierten Harnstoffen, Sulfonylharnstoffen, Thiocarbamaten und Triazinen, Acetochlor, Alachlor, Methachlor, Aminotriazol, Asulam, Bentazon, Bialaphos, Diquat, Paraquat, Bromacil, Clethodim, Sethoxydim, Dicamba, Diflufenican, Pendimethalin, Acifluorfen, C₉₋₁₀-Fettsäuren, Fomesafen, Oxyfluorfen, Fosamin, Flupoxam, Glufosinat, Bromoxynil, Imazaquin, Imazethapyr, Isoxaben, Norflurazon, 2,4-D, Diclofop, Fluazifop, Quizalofop, Picloram, Propanil, Fluometuron, Isoproturon, Chlorimuron, Chlorsulfuron, Halosulfuron, Metsulfuron, Primisulfuron, Sulfometuron, Sulfosulfuron, Triallat, Atrazin, Metribuzin, Triclopyr, einem Salz oder Ester davon.

17. Zusammensetzung nach einem der Ansprüche 1 bis 16, worin die exogene Chemikalie wasserlöslich ist.

18. Zusammensetzung nach einem der Ansprüche 1 bis 17, worin die exogene Chemikalie ein Salz mit einem Anionenteil und einem Kationenteil ist.

19. Zusammensetzung nach Anspruch 18, worin mindestens eines der Anion- und Kationteile biologisch wirksam ist und ein Molekulargewicht von weniger als ungefähr 300 aufweist.

20. Zusammensetzung nach Anspruch 19, worin die exogene Chemikalie Paraquat oder Diquat ist.

21. Zusammensetzung nach Anspruch 19, worin die exogene Chemikalie systemische biologische Aktivität in der Pflanze zeigt.

22. Zusammensetzung nach Anspruch 21, worin die exogene Chemikalie ein oder mehrere funktionelle Gruppen, ausgewählt aus der Gruppe, bestehend aus Amin-, Amid-, Carboxylat-, Phosphonat- und Phosphinat-Gruppen, aufweist.

23. Zusammensetzung nach Anspruch 22, worin die exogene Chemikalie ein Salz von 3,4,4-Trifluor-3-butensäure oder von N-(3,4,4-Trifluor-1-oxo-3-butenyl)glycin ist, welches nematicide Wirkung aufweist.

24. Zusammensetzung nach Anspruch 22, worin die exogene Chemikalie ein Herbizid oder eine pflanzenwachstumsregulierende Verbindung mit mindestens einer von jeweils funktionellen Amin-, Carboxylat- und entweder Phosphonat- oder Phosphinat-Gruppen ist.

25. Zusammensetzung nach Anspruch 24, worin das Herbizid oder die pflanzenwachstumsregulierende Verbindung ein Salz von Glufosinat, vorzugsweise das Ammoniumsalz, darstellt.

26. Zusammensetzung nach einem der Ansprüche 1 bis 25, weiterhin umfassend Wasser in einer Menge, die zur Ausbildung der Zusammensetzung als verdünnte wässrige Zusammensetzung, die für die Auftragung auf Pflanzenblätter fertig ist, wirksam ist.

27. Zusammensetzung nach einem der Ansprüche 1 bis 25, worin die Zusammensetzung eine lagerungsstabile Konzentratzusammensetzung darstellt, welche die exogene Chemikalie in einer Menge von 15 bis 90 Gew.-% umfasst.

28. Zusammensetzung nach Anspruch 27, worin die Zusammensetzung eine feste Zusammensetzung darstellt, welche die exogene Chemikalie in einer Menge von 30 bis 90 Gew.-% umfasst.

29. Zusammensetzung nach Anspruch 28, worin die Zusammensetzung eine wasserlösliche oder wasserdispergierbare granuläre Formulierung darstellt.

30. Zusammensetzung nach Anspruch 27, weiterhin umfassend ein flüssiges Verdünnungsmittel, und worin die Zusammensetzung die exogene Chemikalie in einer Menge von 15 bis 60 Gew.-% umfasst.

31. Zusammensetzung nach Anspruch 30, worin die exogene Chemikalie wasserlöslich ist und in einer wässrigen Phase der Zusammensetzung in einer Menge von 15 bis 45 Gew.-% der Zusammensetzung vorliegt.

32. Zusammensetzung nach Anspruch 31, worin die Zusammensetzung eine Emulsion mit einer Ölphase ist.

33. Zusammensetzung nach Anspruch 32, worin die Zusammensetzung eine Öl-in-Wasser-Emulsion darstellt.

34. Zusammensetzung nach Anspruch 32, worin die Zusammensetzung eine Wasser-in-Öl-Emulsion darstellt.

35. Zusammensetzung nach Anspruch 32, worin die Zusammensetzung eine Wasser-in-Öl-in-Wasser-Mehrfachemulsion darstellt.

36. Pflanzenbehandlungsverfahren, welches das Inkontaktbringen der Blätter oder des Lokus einer Pflanze mit einer biologisch wirksamen Menge einer Zusammensetzung nach einem der Ansprüche 1 bis 35 umfasst.

## Revendications

1. Composition de traitement des plantes comprenant (a) un produit chimique exogène non-glyphosate choisi parmi un herbicide, un nématicide, un régulateur de croissance, et (b) un tensioactif à base d'éther alkylique ou un mélange de tels tensioactifs répondant à la formule
R¹²-O-(CH₂CH₂O)ₙ(CH(CH₃)CH₂O)ₘ-R¹³
dans laquelle R¹² est un groupe alkyle ou alcényle portant 16 à 22 atomes de carbone, n est un nombre moyen de 20 à 100, m est un nombre moyen de 0 à 5, et R¹³ est un hydrogène ou un groupe alkyle en C₁₋₄, présent dans une quantité telle que le rapport pondéral dudit tensioactif à base d'éther alkylique ou mélange de tels tensioactifs au produit chimique exogène est de 1:3 à 1:100.

2. Composition selon la revendication 1, dans laquelle m vaut 0 et R¹³ est un hydrogène.

3. Composition selon la revendication 1, dans laquelle n vaut de 20 à 40.

4. Composition selon la revendication 2, dans laquelle R¹² est un groupe alkyle à chaîne linéaire saturée.

5. Composition selon la revendication 4, dans laquelle le tensioactif à base d'éther alkylique est un éther cétylique ou stéarylique ou un mélange de ceux-ci.

6. Composition selon l'une quelconque des revendications 1 à 5, comprenant en outre de l'eau et une quantité d'un matériau colloïdal particulaire inorganique solide efficace pour stabiliser la composition, ladite composition ne présentant pas de séparation des phases sur une période de temps T quand elle est conservée dans un récipient fermé à une température dans la gamme de 15°C à 30°C, T se situant dans la gamme de 1 heure à 60 jours : dans laquelle le produit chimique exogène et le tensioactif sont présents à des concentrations absolues ou relatives l'une par rapport à l'autre telles que, en l'absence du matériau colloïdal, une séparation des phases se produirait pendant ladite période de temps T.

7. Composition selon la revendication 6, dans laquelle matériau colloïdal comprend des particules choisies dans le groupe constitué par les oxydes de silicium, les oxydes d'aluminium, les oxydes de titane et les mélanges de ceux-ci.

8. Composition selon la revendication 6, dans laquelle le matériau colloïdal particulaire possède une surface spécifique moyenne de 50 à 400 m²/g.

9. Composition selon la revendication 6, dans laquelle le matériau colloïdal particulaire possède une surface spécifique moyenne de 180 à 400 m²/g.

10. Composition selon la revendication 6, dans laquelle le matériau colloïdal particulaire possède une distribution bimodale de la surface spécifique par laquelle un premier composant du matériau colloïdal possède une surface spécifique moyenne de 50 à 150 m²/g et un second composant du matériau colloïdal possède une surface spécifique moyenne de 180 à 400 m²/g.

11. Composition selon l'une quelconque des revendications 1 à 10, comprenant en outre un composé de formule
R¹⁴-CO-A-R¹⁵
dans laquelle R¹⁴ est un groupe hydrocarbyle portant 5 à 21 atomes de carbone, R¹⁵ est un groupe hydrocarbyle portant 1 à 14 atomes de carbone, le nombre total d'atomes de carbone dans R¹⁴ et R¹⁵ est de 11 à 27, et A est O ou NH.

12. Composition selon la revendication 11, dans laquelle ledit composé est un ester d'alkyle en C₁₋₄ d'un acide gras en C₁₂₋₁₈ éventuellement saturé.

13. Composition selon la revendication 11 ou 12, dans laquelle ledit composé est un ester propylique, isopropylique ou butylique d'un acide gras en C₁₂₋₁₈.

14. Composition selon l'une quelconque des revendications 11 à 13, dans laquelle ledit composé est le stéarate de butyle.

15. Composition selon l'une quelconque des revendications 1 à 14, dans laquelle le produit chimique exogène est un produit chimique exogène foliaire.

16. Composition selon l'une quelconque des revendications 1 à 14, dans laquelle l'herbicide est choisi dans le groupe constitué par les acétanilides, les bipyridyles, les cyclohexénones, les dinitroanilines, les éthers diphényliques, les acides gras, les hydroxybenzonitriles, les imidazolinones, les phénoxys, les phénoxypropionates, les urées substituées, les sulfonylurées, les thiocarbamates et les triazines, l'acétochlore, l'alachlore, le métolachlore, l'aminotriazole, l'asulame, le bentazone, le bialaphos, le diquat, le paraquat, le bromacil, le cléthodime, le séthoxydime, le dicamba, le diflufénican, la pendiméthaline, l'acifluorfène, les acides gras en C₉₋₁₀, le fomésafène, l'oxyfluorfène, la fosamine, le flupoxame, le glufosinate, le bromoxynil, l'imazaquine, l'imazéthapyr, l'isoxabène, le norflurazon, le 2,4-D, le diclofop, le fluazifop, le quizalofop, le piclorame, le propanil, le fluométuron, l'isoproturon, le chlorimuron, le chlorsulfuron, l'halosulfuron, le metsulfuron, le primisulfuron, le sulfométuron, le sulfosulfuron, le triallate, l'atrazine, la métribuzine, le triclopyr, les sels et les esters de ceux-ci.

17. Composition selon l'une quelconque des revendications 1 à 16, dans laquelle le produit chimique exogène est hydrosoluble.

18. Composition selon l'une quelconque des revendications 1 à 17, dans laquelle le produit chimique exogène est un sel possédant une partie anion et une partie cation.

19. Composition selon la revendication 18, dans laquelle l'une au moins desdites parties anion et cation est biologiquement active et possède un poids moléculaire inférieur à environ 300.

20. Composition selon la revendication 19, dans laquelle le produit chimique exogène est le paraquat ou le diquat.

21. Composition selon la revendication 19, dans laquelle le produit chimique exogène présente une activité biologique systémique dans la plante.

22. Composition selon la revendication 21, dans laquelle le produit chimique exogène porte un ou plusieurs groupes fonctionnels choisis dans le groupe constitué par les groupes amine, amide, carboxylate, phosphonate et phosphinate.

23. Composition selon la revendication 22, dans laquelle le produit chimique exogène est un sel d'acide 3,4,4-trifluoro-3-buténoïque ou de N-(3,4,4-trifluoro-1-oxo-3-butényl)glycine qui présente une activité nématicide.

24. Composition selon la revendication 22, dans laquelle le produit chimique exogène est un composé herbicide ou régulateur de croissance portant l'un au moins de chacun des groupes fonctionnels amine, carboxylate et phosphonate ou phosphinate.

25. Composition selon la revendication 24, dans laquelle le composé herbicide ou régulateur de croissance est un sel de glufosinate, de préférence le sel d'ammonium.

26. Composition selon l'une quelconque des revendications 1 à 25, comprenant en outre de l'eau dans une quantité efficace pour faire de la composition une composition aqueuse diluée prête à l'application au feuillage d'une plante.

27. Composition selon l'une quelconque des revendications 1 à 25, la composition étant une composition concentrée stable à la conservation comprenant le produit chimique exogène dans une quantité de 15 à 90 pour cent en poids.

28. Composition selon la revendication 27, la composition étant une composition solide comprenant la substance chimique exogène dans une quantité de 30 à 90 pour cent en poids.

29. Composition selon la revendication 28, la composition étant une composition granulaire hydrosoluble ou dispersible dans l'eau.

30. Composition selon la revendication 27, comprenant en outre un diluant liquide, et dans laquelle la composition comprend la substance chimique exogène dans une quantité de 15 à 60 pour cent en poids.

31. Composition selon la revendication 30, dans laquelle la substance chimique exogène est hydrosoluble et est présente dans une phase aqueuse de la composition dans une quantité de 15 à 45 pour cent en poids de la composition.

32. Composition selon la revendication 31, la composition étant une émulsion comportant une phase huileuse.

33. Composition selon la revendication 32, la composition étant une émulsion huile-dans-eau.

34. Composition selon la revendication 32, la composition étant une émulsion eau-dans-huile.

35. Composition selon la revendication 32, la composition étant une émulsion multiple eau-dans-huile-dans-eau.

36. Procédé de traitement des plantes, comprenant la mise en contact du feuillage ou d'un endroit d'une plante avec une quantité biologiquement efficace d'une composition selon l'une quelconque des revendications 1 à 35.
